(19) Europäisches Patentamt
European Patent Office
Office européen des brevets

(11) **EP 1 078 972 B1**

(12) **EUROPÄISCHE PATENTSCHRIFT**

(45) Veröffentlichungstag und Bekanntmachung des Hinweises auf die Patenterteilung:
**26.10.2005   Patentblatt 2005/43**

(51) Int Cl.⁷: **C09K 11/80**, H01J 61/44, C09K 11/02

(21) Anmeldenummer: **00121142.4**

(22) Anmeldetag: **05.04.1994**

(54) **Leuchtstofflampe für Beleuchtungszwecke**

fluorescent lamp for illumination purposes

lampe fluorescente utilisée à des fins d'éclairage

(84) Benannte Vertragsstaaten:
**BE CH DE FR GB IT LI NL SE**

(30) Priorität: **05.04.1993  DE 4311197**

(43) Veröffentlichungstag der Anmeldung:
**28.02.2001   Patentblatt 2001/09**

(62) Dokumentnummer(n) der früheren Anmeldung(en) nach Art. 76 EPÜ:
**94911105.8 / 0 738 311**

(73) Patentinhaber: **Patent-Treuhand-Gesellschaft für elektrische Glühlampen mbH
81543 München (DE)**

(72) Erfinder:
- **Zachau, Martin
  82269 Geltendorf (DE)**
- **Schmidt, Dieter
  80798 München (DE)**
- **Müller, Ulrich
  81479 München (DE)**

(56) Entgegenhaltungen:
**EP-A- 0 062 993        EP-A- 0 331 738
EP-A- 0 498 689        US-A- 1 022 399
US-A- 4 161 457        US-A- 4 423 349**

- **DATABASE WPI Section Ch, Week 199407 Derwent Publications Ltd., London, GB; Class L03, AN 1994-054380 XP002176682 & KR 9 305 688 B (SAMSUNG ELECTRON DEVICES CO), 24. Juni 1993 (1993-06-24)**
- **DATABASE WPI Section Ch, Week 197751 Derwent Publications Ltd., London, GB; Class L03, AN 1977-90821Y XP002176683 & JP 52 133091 A (DAINIPPON TORYO KK), 8. November 1977 (1977-11-08)**
- **DATABASE WPI Section Ch, Week 198419 Derwent Publications Ltd., London, GB; Class L03, AN 1984-118637 XP002176684 & JP 59 015951 B (MATSUSHITA), 12. April 1984 (1984-04-12)**
- **DATABASE WPI Section Ch, Week 199027 Derwent Publications Ltd., London, GB; Class L03, AN 1990-204934 XP002176685 & JP 02 135277 A (SANYO), 24. Mai 1990 (1990-05-24)**

**Beschreibung**

Die Erfindung betrifft eine, Leuchtstofflampe gemäß dem Oberbegriff des Anspruchs 1.

Sie steht in engem Zusammenhang mit der deutschen Patentanmeldung P 43 11 197.1, in der eine neuartige Betriebsweise für dielektrisch behinderte Entladungen offenbart ist. Die dort näher erläuterte Lehre ermöglicht u.a. eine deutlich effizientere Erzeugung von UV- bzw. VUV-Strahlung, insbesondere mittels Excimeren - z.B. $Xe_2^*$, welches eine molekulare Bandenstrahlung im Bereich um 172 nm emittiert -, als dies bisher möglich war. Im folgenden soll mit dem Begriff "VUV-Strahlung" insbesondere elektromagnetische Strahlung mit Wellenlängen im Bereich zwischen ca. 145 nm und 185 nm bezeichnet werden.

Das Hauptanwendungsgebiet heutiger Leuchtstoffe in der Beleuchtungstechnik, d.h. zur Umwandlung kurzwelliger elektromagnetischer Strahlung in Licht, ist die Leuchtstofflampe. Diese basiert auf der Quecksilber-Niederdruckentladung, die Energie überwiegend in Form von UV-Strahlung emittiert. Dabei handelt es sich im wesentlichen um die Strahlung einer atomaren Spektrallinie mit einer Wellenlänge von ca. 254 nm.

Um dem wachsenden Umweltbewußtsein Rechnung zu tragen, werden in jüngster Zeit zunehmend quecksilberfreie UV- und VUV-Strahlungsquellen entwickelt. Bisher konnten allerdings nur relativ geringe UV- bzw. VUV-Ausbeuten (ca. 10 % bis 20 %, bei technisch relevanten Leistungsdichten) erzielt werden im Vergleich zur Quecksilber-Niederdruckentladung (ca. 70 %). Ein Einsatz dieser quecksilberfreien UV- bzw. VUV-Strahler in der Ausgestaltung einer Leuchtstofflampe für die Allgemeinbeleuchtung war deshalb unwirtschaftlich und kam bisher nicht in Betracht. Daher bestand bisher auch nicht die Notwendigkeit nach Leuchtstoffen zu suchen, die sowohl im VUV-Bereich gut anregbar als auch bezüglich ihrer Emissionseigenschaften für Zwecke der Allgemeinbeleuchtung geeignet sind. Mit der in o.g. Patentanmeldung erläuterten Betriebsweise können nun erstmalig auch in quecksilberfreien Entladungen Wirkungsgrade, insbesondere zur Erzeugung von VUV-Strahlung von 65 % und mehr erzielt werden. Die hohen VUV-Ausbeuten werden insbesondere durch die sehr effiziente Erzeugung von $Xe_2^*$- Excimeren realisiert. Dabei wird der Hauptteil der Strahlungsleistung im Wellenlängenbereich zwischen ca. 145 nm und 185 nm emittiert. Damit ist in Hinblick auf eine effiziente Strahlungserzeugung eine echte Alternative für die konventionelle Quecksilber-Niederdruckentladung gefunden. Für einen Einsatz der neuartigen Strahlungsquelle in der Allgemeinbeleuchtung ist allerdings die Konversion der kurzwelligen VUV-Strahlung in Licht erforderlich, d.h. in den sichtbaren Bereich des optischen Spektrums.

Der Erfindung liegt die Aufgabe zugrunde, eine Leuchtstofflampe mit für Zwecke der Allgemeinbeleuchtung geeigneter Leuchtstoffbeschichtung anzugeben, wobei die Leuchtstofflampe auf einem VUV-Strahler basiert, der insbesondere Wellenlängen im Bereich zwischen ca. 145 nm und 185 nm erzeugt. Diese Aufgabe wird durch den Anspruch 1 gelöst. Weitere vorteilhafte Merkmale finden sich in den abhängigen Ansprüchen.

Eine charakterisierende Größe für die Effizienz der Konversion elektromagnetischer Strahlung durch Leuchtstoffe ist deren wellenlängenabhängige Anregbarkeit. Sie ist proportional dem Produkt aus Absorption und Quantenwirkungsgrad. Letzterer ist die Wahrscheinlichkeit für die Erzeugung eines Photons durch den Leuchtstoff, nachdem ein Photon kürzerer Wellenlänge (höherer Energie) absorbiert wurde. Maximale Anregbarkeit liegt demnach vor, wenn sowohl die Absorption als auch der Quantenwirkungsgrad 100 % betragen, d.h. jedes einfallende Photon absorbiert und in ein Photon längerer Wellenlänge (niederer Energie) konvertiert wird.

In Voruntersuchungen ist gezielt die Anregbarkeit einer Vielzahl für den Einsatz in herkömmlichen Leuchtstofflampen mit Quecksilber-Niederdruckentladung gebräuchlicher Leuchtstoffe mit VUV-Strahlung meßtechnisch ermittelt worden. Dabei hat es sich gezeigt, daß bei allen Leuchtstoffen mit abnehmender Wellenlänge der einfallenden Strahlung zwar die Absorption im wesentlichen zunimmt, die Anregbarkeit aber bei Unterschreiten einer Grenzwellenlänge überraschenderweise drastisch abnimmt.

Die dem beobachteten Verhalten zugrunde liegenden physikalischen Vorgänge sind noch nicht vollständig geklärt. Gegenwärtig wird angenommen, daß mögliche Ursachen in grundlegend unterschiedlichen Absorptionsmechanismen für Strahlung mit Wellenlängen unterhalb der Grenzwellenlänge begründet sind. Die Strahlungsleistung der für die Leuchtstoffanregung wichtigsten Spektrallinie der herkömmlichen Quecksilber-Niederdruckentladung mit der Wellenlänge 254 nm führt hauptsächlich zu einer Anregung der auch als Leuchtzentren wirkenden Aktivatoratome oder ggf. vorhandener Koaktivatoren (Sensibilisatoren). Die Sensibilisatoren transferieren in diesem Fall die Anregungsenergie auf die Aktivatoratome. Unterhalb der Grenzwellenlänge nimmt die Absorption durch das Wirtsgitter sprunghaft zu (der Absorptionskoeffizient erreicht Werte in der Größenordnung von $10^5$ cm$^{-1}$ und mehr). Die Grenzwellenlänge kann deshalb vereinfachend als die Wellenlänge interpretiert werden, die ein Photon höchstens haben darf um ein Elektron aus dem Valenzband des Wirtsgitters gerade noch in das Leitungsband anregen zu können. Die entsprechende Energiedifferenz zwischen Valenz- und Leitungsband wird im folgenden als optische Bandlücke bezeichnet und die Grenzwellenlänge als optische Bandkante.

Wird ein Elektron des Wirtsgitters vom Valenz- in das Leitungsband angeregt, indem es ein Photon entsprechender Energie absorbiert, entsteht ein "Elektron-Loch-Paar", wobei Elektron und Loch frei oder als Exziton gebunden sein können (Details hierzu finden sich z. B. in: Charles Kittel. "Einführung in die Festkörperphysik". Oldenbourg Verlag, München, 5. Auflage, 1980, S. 359 ff). Ein Exziton ist elektrisch neutral und kann sich deshalb innerhalb des Gitters relativ frei bewegen und seine Energie an einen Stoßpartner abgeben, beispielsweise an ein Aktivatoratom. Dieses kann seinerseits Energie in Form von Licht abstrahlen. Für zunehmende Photonenenergien (abnehmende Wellenlängen der absorbierten Strahlung) wurde experimentell eine deutliche Abnahme der Anregbarkeit ermittelt, sobald die Photonenenergien größer als die optische Bandlücke (d.h. die Wellenlängen der Photonen kleiner als die optische Bandkante) sind. Ohne daß eine Festlegung auf irgendeine theoretische Erklärung beabsichtigt ist, werden gegenwärtig sowohl Oberflächen- als auch Volumenstörstellen für diese Beobachtung verantwortlich gemacht. Die Störstellen "fangen" zunehmend die freien Elektronen und Löcher bzw. die Exzitonen ein, bevor letztere ihre Energie an die Aktivatoratome (d.h. Leuchtzentren) abgeben können. Von den Störstellen - das können Verunreinigungen, Versetzungen o.ä. sein - geht die Energie strahlungslos in verschiedene Verlustkanäle und führt letztlich nur zu einer unerwünschten Erwärmung des Leuchtstoffs.

Hier setzt die Lehre der Erfindung ein, die gezielt einen Leuchtstoff für Beleuchtungszwecke verwendet, der sich mit VUV-Strahlung effizient anregen läßt. Aufgrund der eingangs geschilderten Erkenntnisse handelt es sich hierbei um einen Leuchtstoff, dessen optische Bandlücke des Wirtsgitters oberhalb der niederenergetischen Grenze des Energiespektrums der VUV-Strahlung liegt, insbesondere oberhalb 6,7 eV. Geeignete Wirtsgitter sind z.B. Borate, Phosphate, Aluminate sowie Silikate. Das Wirtsgitter ist mit mindestens einer zusätzlichen Substanz dotiert, die als Leuchtzentrum fungiert und üblicherweise als Aktivator bezeichnet wird. Durch geeignete Wahl des Aktivators ist das optische Spektrum der Lumineszenz gezielt beeinflußbar. Dabei dient die Farbe der Lumineszenz zur Bezeichnung des betreffenden Leuchtstoffs. Die drei Grundfarben Rot, Grün und Blau sind für die Beleuchtungstechnik von herausragendem Interesse, weil sich mit ihnen prinzipiell jede beliebige Mischfarbe, z.B. für die Effekt- oder Signalbeleuchtung sowie weißes Licht - besonders wichtig für die Allgemeinbeleuchtung - erzeugen läßt. Dazu werden die verschiedenen Leuchtstoffkomponenten geeignet kombiniert, beispielsweise gemischt oder in alternierender Folge angeordnet. Geeignete Aktivatoren sind z.B. $Eu^{3+}$ für Rotleuchtstoffe, $Tb^{3+}$ für Grünleuchtstoffe und $Eu^{2+}$ für Blauleuchtstoffe. Insbesondere können damit gezielt solche Leuchtstoffe aktiviert werden, deren Emissionsspektren besonders gut für einen Dreibandenleuchtstoff geeignet sind. Zur Optimierung sowohl der Lichtausbeute als auch der Farbwiedergabe einer Dreibandenlampe für die Allgemeinbeleuchtung muß die Hauptemission des Rotleuchtstoffes bei ca. 610 nm, des Grünleuchtstoffes bei ca. 540 nm und des Blauleuchtstoffes bei ca. 450 nm liegen (s. z. B. A.W. Thornton. J. Opt. Soc. Am. 61(1971)1155).

In einer weiteren Ausführung sind dem Wirtsgitter eine oder auch mehrere weitere Dotierungssubstanzen zugesetzt. Dabei handelt es sich ebenfalls um Aktivatoren, d.h. Leuchtzentren. Auf diese Weise ist es auch mit nur einem Leuchtstoff möglich, durch geeignete Wahl der verschiedenen Aktivatoren im Prinzip beliebige Mischfarben zu erzielen. Aus einem Leuchtstoff mit einem grün und einem rot lumineszierenden Aktivator wird z.B. gelbes Licht erzeugt. Für weißes Licht ist noch zusätzlich mindestens ein dritter, blau lumineszierender Aktivator erforderlich.

Der erfindungsgemäß verwendete Grünleuchtstoff ist das mit dreiwertigem Terbium $Tb^{3+}$ aktivierte Mischaluminat $(Y_xGd_yTb_z)_3Al_5O_{12}$, wobei gilt: $0,1 \leq x \leq 0,99$, $0 \leq y \leq 0,9$, $0,03 \leq z \leq 0,4$ und $x+y+z \approx 1$, insbesondere $y = 0$, $0,8 \leq x \leq 0,99$, $0,01 \leq z \leq 0,2$ und $x+z \approx 1$.

Der beschriebene Leuchtstoff ist zu einer Leuchtstoffbeschichtung verarbeitet. Die Leuchtstoffbeschichtung ist auf der Innenwandfläche eines Lampenkolbens aufgetragen, wobei innerhalb des Lampenkolbens VUV-Strahlung, insbesondere mit Wellenlängen im Bereich zwischen ca. 145 nm und 185 nm erzeugt wird. Diese kurzwellige Strahlung wird in Luft und den meisten Lampengefäßmaterialien bereits stark absorbiert, weshalb eine Beschichtung auf der Außenwand spezielle und damit teuere VUV-transparente Materialien - z.B. spezielle Quarzgläser wie SUPRASIL® (Fa. Heraeus) - erfordern würde. Außerdem müßte die Lampe in diesem Fall zum Schutz der Beschichtung gegen Berührung einen zusätzlichen Außenkolben aufweisen.

Darüber hinaus kann es vorteilhaft sein, die Oberfläche der Leuchtstoffe, d.h. der einzelnen Leuchtstoffkörner und/oder der aufgetragenen Leuchtstoffbeschichtung mit einer Schutzschicht zu versehen, die im VUV-Bereich ausreichend transparent ist, z.B. aus $MgF_2$.

Die Erfindung wird im folgenden anhand eines Ausführungsbeispiels näher erläutert. Die lichttechnischen Daten wurden durch Anregung mit $Xe_2^*$-Excimerstrahlung ermittelt. Die Größe $E_{Xe}$ gibt an, wie hoch die Anregbarkeit mit VUV-Strahlung (mit dem Spektrum der $Xe_2^*$-Excimerstrahlung im Wellenlängenbereich zwischen 145 nm und 185 nm gewichtetes Mittel) relativ zur maximalen Anregbarkeit ist, die bei einer bestimmten diskreten Wellenlänge erreicht wird. $E_{Xe}$ ist somit der Wert, auf den sich die Anregbarkeit eines Leuchtstoffes reduziert, wenn er nicht mit Strahlung der Wellenlänge seines Anregungsmaximums sondern mit dem gesamten Kontinuum der Excimerstrahlung im Wellenlängenbereich zwischen 145 nm und 185 nm bestrahlt wird. $Q_{X_e}$ bezeichnet den angenäherten Quantenwirkungsgrad (er wird von der Präparation des Leuchtstoffes beeinflußt und wurde nicht optimiert, so daß die angegebenen Werte als untere Grenzen zu verstehen sind).

Das Ausführungsbeispiel beschreibt zwei weitere Grünleuchtstoffe. Es handelt sich um mit dreiwertigem Terbium aktivierte Seltenerd-Mischaluminate. Der erste Leuchtstoff ist ein Yttriumaluminat folgender Zusammensetzung $(Y_{0,9}Tb_{0,1})_3Al_5O_{12}$. Folgende Werte wurden ermittelt: $E_{Xe} = 0,94$, $Q_{Xe} = 0,76$. Beim zweiten - in seinen Eigenschaften gleichwertigen - Leuchtstoff ist Yttrium zu 20% durch Gadolinium substituiert: $(Y_{0,7}Gd_{0,2}Tb_{0,1})_3Al_5O_{12}$

**Patentansprüche**

1. Leuchtstofflampe mit einer Leuchtstoffbeschichtung auf der Innenwandfläche des Lampenkolbens, wobei innerhalb des Lampenkolbens VUV-Strahlung, insbesondere mit Wellenlängen im Bereich zwischen ca. 145 nm und 185 nm erzeugt wird, **dadurch gekennzeichnet, daß** die Leuchtstoffbeschichtung ein Mischaluminat entsprechend der allgemeinen Formel

$$(Y_xGd_yTb_z)_3Al_5O_{12}$$

umfaßt, wobei gilt: $0,1 \leq x \leq 0,99$, $0 \leq y \leq 0,9$, $0,01 \leq z \leq 0,4$ und $x + y + z \approx 1$.

2. Leuchtstofflampe nach Anspruch 1, **dadurch gekennzeichnet, dass** $y = 0$ und $x$, $z$ in den Bereichen $0,8 \leq x \leq 0,99$, $0,01 \leq z \leq 0,2$ liegen und $x + z \approx 1$.

3. Leuchtstofflampe nach Anspruch 1 oder 2, **dadurch gekennzeichnet, daß** die Oberfläche der Leuchtstoffe und/oder der Leuchtstoffbeschichtung mit einer Schutzschicht versehen ist.

4. Leuchtstofflampe nach Anspruch 3, **dadurch gekennzeichnet, daß** die Schutzschicht aus $MgF_2$ besteht.

**Claims**

1. Fluorescent lamp having a fluorescent substance coating on the inner wall surface of the lamp bulb, VUV radiation, in particular with wavelengths in the range between approximately 145 nm and 185 nm, being generated inside the lamp bulb, **characterized in that** the fluorescent substance coating comprises a mixed aluminate corresponding to the general formula

$$(Y_xGd_yTb_z)_3Al_5O_{12}$$

wherein it holds that: $0.1 \leq x \leq 0.99$, $0 \leq y \leq 0.9$, $0.01 \leq z \leq 0.4$ and $x + y + z \approx 1$.

2. Fluorescent lamp according to Claim 1, **characterized in that** $y = 0$ and x, z are in the ranges $0.8 \leq x \leq 0.99$, $0.01 \leq z \leq 0.2$ and $x + z \approx 1$.

3. Fluorescent lamp according to Claim 1 or 2, **characterized in that** the surface of the fluorescent substances and/or of the fluorescent substance coating is provided with a protective layer.

4. Fluorescent lamp according to Claim 3, **characterized in that** the protective layer comprises $MgF_2$.

**Revendications**

1. Lampe fluorescente comprenant un revêtement de substance luminescente sur la surface de paroi intérieure de l'ampoule de la lampe, un rayonnement UVL ayant notamment des longueurs d'onde dans le domaine compris entre environ 145 nm et 185 nm étant produit à l'intérieur de l'ampoule de la lampe, **caractérisée en ce que** le revêtement de substance luminescente comprend un aluminate mixte correspondant à la formule générale

$$(Y_xGd_yTb_z)_3Al_5O_{12}$$

dans laquelle $0,1 \leq x \leq 0,99$, $0 \leq y \leq 0,9$, $0,01 \leq z \leq 0,4$ et $x + y + z \approx 1$.

2. Lampe fluorescente suivant la revendication 1, **caractérisée en ce que** $y = 0$ et $x$, $z$ sont dans les plages $0,8 \leq x \leq 0,99$, $0,01 \leq z \leq 0,2$ et $x + z \approx 1$.

3. Lampe fluorescente suivant la revendication 1 ou 2, **caractérisée en ce que** la surface de la substance luminescente et/ou du revêtement de substance luminescente est munie d'une couche de protection.

4. Lampe fluorescente suivant la revendication 3, **caractérisée en ce que** la couche de protection est en $MgF_2$.